# EUROPEAN PATENT APPLICATION

(11) **EP 2 730 377 A2**
(43) Date of publication of application: **14.05.2014**
(21) Application number: 13182580.4
(22) Date of filing: 02.09.2013
(51) Int. Cl.: B25J 19/06

(54) **Robot system**

(30) Priority: 12.11.2012 JP 2012248199
(71) Applicant: Kabushiki Kaisha Yaskawa Denki, Kitakyushu-shi, Fukuoka 806-0004 (JP)
(72) Inventor: Hirata, Ryokichi, Kitakyushu-shi, Fukuoka 806-0004 (JP)
(74) Representative: Viering, Jentschura & Partner Patent- und Rechtsanwälte

(57) **Abstract**

A robot system (1) includes a robot (10), a storage (22), an authenticator (21a), a determinator (21c), and an instructor (21d). The robot (10) shares a workspace with a worker (M). The storage (22) stores authentication information (22a) of the worker (M). The authenticator (21a) determines, while the worker (M) is approaching the workspace, whether the worker (M) is a registered worker based on the authentication information (22a). When the worker (M) is authenticated as a registered worker, the determinator (21c) determines a new operation area and a new operation speed of the robot (10) in accordance with a type of work and a work experience of the worker (M), which are identified when the worker (M) is authenticated as a registered worker. The instructor (21d) instructs the robot (10) to operate based on the new operation area and the new operation speed of the robot (10).

## Description

### BACKGROUND OF THE INVENTION

### FIELD OF THE INVENTION

The present invention relates to a robot system.

### DISCUSSION OF THE BACKGROUND

As conventionally known, human interactive robot systems have robots to share a workspace with humans (see, for example, Japanese Unexamined Patent Application Publication No. 2007- 283450). In order to ensure safety of workers, various proposals have been made for the robot systems to avoid industrial accidents that can occur between the worker and the robot when they contact one another.

For example, Japanese Unexamined Patent Application Publication No. 2007-283450 discloses a robot system as a safety device for use in human-robot interactive work. The robot system includes a robot intrusion detector and a worker intrusion detector. These detectors are what are called optical sensors, and the optical axes of the detectors define an off-limits area both for the robot and the worker. When either the robot or the worker enters the off-limits area, the robot stops or limits its operation speed, thus ensuring safety for the worker.

The contents of Japanese Unexamined Patent Application Publication No. 2007-283450 are incorporated herein by reference in their entirety.

Unfortunately, the above-described conventional technique leaves room for further improvement in terms of ensuring enhanced work efficiency and safety at the same time. Specifically, the above-described conventional technique disregards the work experience and the type of work of the worker; upon detection of an intrusion into the off-limits area, the robot is forced to stop or limit its operation speed. That is, workers have been treated impartially, which has made the enhancement of work efficiency difficult.

In addition to the workers, intruders with the intention of theft of workpieces or other objects, for example, have also been treated impartially. Thus, the above-described conventional technique falls short of ensuring system safety encompassing not only security but also crime prevention.

One aspect of the present invention has been made in view of the above-described circumstances, and it is an object of the present invention to provide a robot system that ensures enhanced work efficiency and safety at the same time.

### SUMMARY OF THE INVENTION

According to one aspect of the present invention, a robot system 1 includes a robot 10, a storage 22, an authenticator 21a, a determinator 21c, and an instructor 21d. The robot 10 is configured to share a workspace with a worker M. The storage 22 is configured to store authentication information 22a of the worker M. The authenticator 21a is configured to, while the worker M is approaching the workspace, determine whether the worker M is a registered worker based on the authentication information 22a. The determinator 21c is configured to, when the worker M is authenticated as a registered worker by the authenticator 21a, determine a new operation area and a new operation speed of the robot 10 in accordance with a type of work and a work experience of the worker M. The type of work and the work experience are identified when the worker M is authenticated as a registered worker by the authenticator 21a. The instructor 21d is configured to instruct the robot 10 to operate based on the new operation area and the new operation speed of the robot 10 determined by the determinator 21c.

The one aspect of the present invention ensures enhanced work efficiency and safety at the same time.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1A is a schematic plan view of a robot system according to an embodiment, illustrating a configuration of the robot system;
FIG. 1B is a schematic side view of the robot system according to the embodiment, illustrating a configuration of the robot system;
FIG. 2 is a block diagram of the robot system according to the embodiment;
FIG. 3A illustrates exemplary authentication targets of an authenticator;
FIG. 3B illustrates an example of authentication information;
FIG. 4 illustrates an example of worker information;
FIG. 5A schematically illustrates operation instruction determination processing;
FIG. 5B illustrates an example of operation regulation information; and
FIG. 6 is a flowchart of a procedure of processing executed by the robot system according to the embodiment.

### DESCRIPTION OF THE EMBODIMENTS

A robot system according to an embodiment of the present application will be described in detail below by referring to the accompanying drawings. It is noted that the following embodiment is provided for exemplary purposes only and are not intended to limit the present invention.

The following description takes as an example a two-arm robot, which has a pair of left and right arms. Additionally, the "robot hand", which is an end effector, will be hereinafter referred to as a "hand".

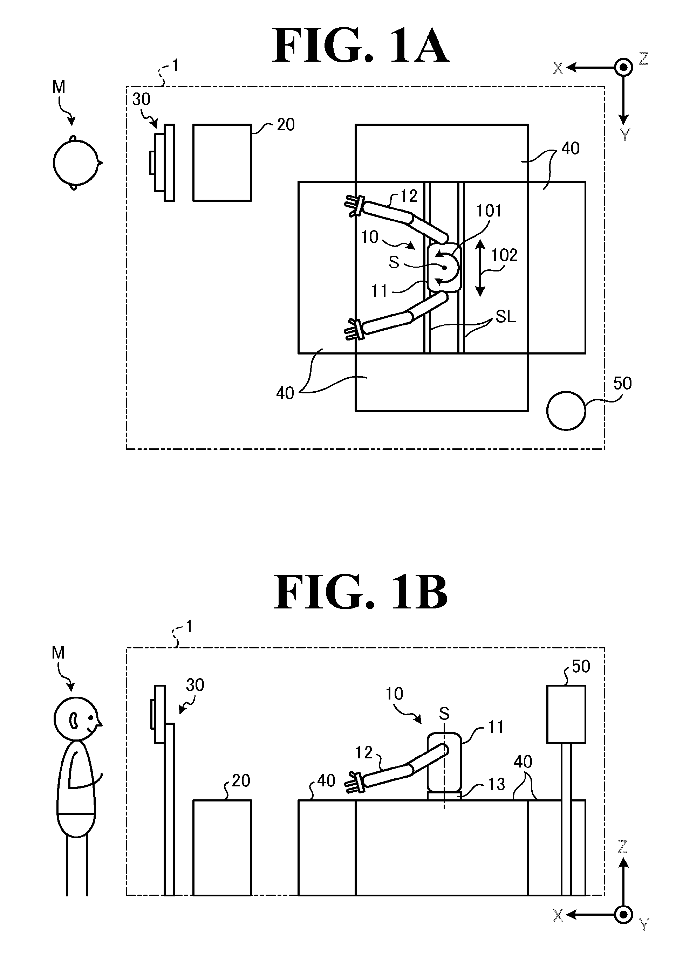

First, a configuration of the robot system 1 according to the embodiment will be described by referring to FIGs. 1A and 1B. FIG. 1A is a schematic plan view of the robot system 1 according to the embodiment, illustrating a configuration of the robot system. FIG. 1B is a schematic side view of the robot system 1 according to the embodiment, illustrating a configuration of the robot system.

For ease of description, FIGs. 1A and 1B each show a three-dimensional Cartesian coordinates system containing a Z axis with its vertically upward direction assumed positive direction and the vertically downward direction assumed negative direction. This Cartesian coordinates system also appears in a certain other figure used in the following description.

As shown in FIGs. 1A and 1B, a robot system 1 includes a robot 10, a control apparatus 20, an authentication device 30, a work stand 40, and an alarm device 50. The control apparatus 20 is coupled in an information transmittable manner to the various devices such as the robot 10, the authentication device 30, and the alarm device 50.

The robot 10 is a manipulator that shares a workspace with a worker M and that performs a predetermined operation in a predetermined operation area under operation control of the control apparatus 20. It is noted that this workspace can be assumed the rectangular area defined by the two-dot chain line surrounding the robot system 1 in FIGs. 1A and 1B.

It is noted that there is no particular limitation to the configuration of the robot 10. For example, as shown in FIGs. 1A and 1B, the robot 10 according to this embodiment includes a body 11, a pair of arms 12, which correspond to both arms of the robot 10, and a base 13.

The body 11 is disposed while being capable of a rotation axis operation about a rotation axis S relative to the base 13 (see two arrows 101 in the drawing). The base 13 is installed on a motion mechanism such as a carriage (not shown), on the floor surface, or on some other surface. For example, when the base 13 is installed on a carriage, the base 13 is capable of a travel shaft operation along travel shafts SL (see arrows 102 in the drawing).

Each of the arms 12 has a hand mounted to the distal-end movable portion of the arm 12. The hand performs operations in a predetermined kind of work by the robot 10 in conjunction with a bending operation of the arms 12. Examples of the operations by the hand include gripping a workpiece and gripping a tool to process a workpiece.

The control apparatus 20 is a controller that controls the operation of the various devices, such as the robot 10, coupled to the control apparatus 20. Specifically, the control apparatus 20 performs operation control of the robot 10. Also the control apparatus 20 acquires from the authentication device 30 information concerning a worker M who is approaching the workspace, so as to perform authentication processing of the worker M.

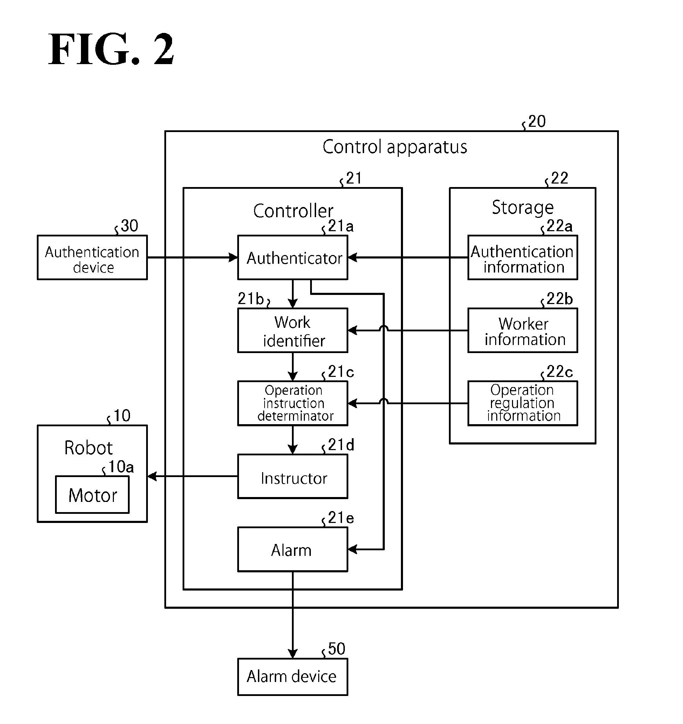

When the worker M is not determined as a registered worker in the authentication processing, the control apparatus 20 controls the alarm device 50 to perform an alert operation. A detailed configuration of the control apparatus 20 will be described later by referring to FIG. 2.

While in FIGs. 1A and 1B the control apparatus 20 is illustrated as a single housing, this should not be construed in a limiting sense. For example, the control apparatus 20 may have a plurality of housings corresponding to the respective various devices as control targets.

The authentication device 30 is a unit that acquires information concerning the worker M approaching the workspace, and that notifies the information to the control apparatus 20. An example of the authentication device 30 is a camera that picks up a face image of the worker M.

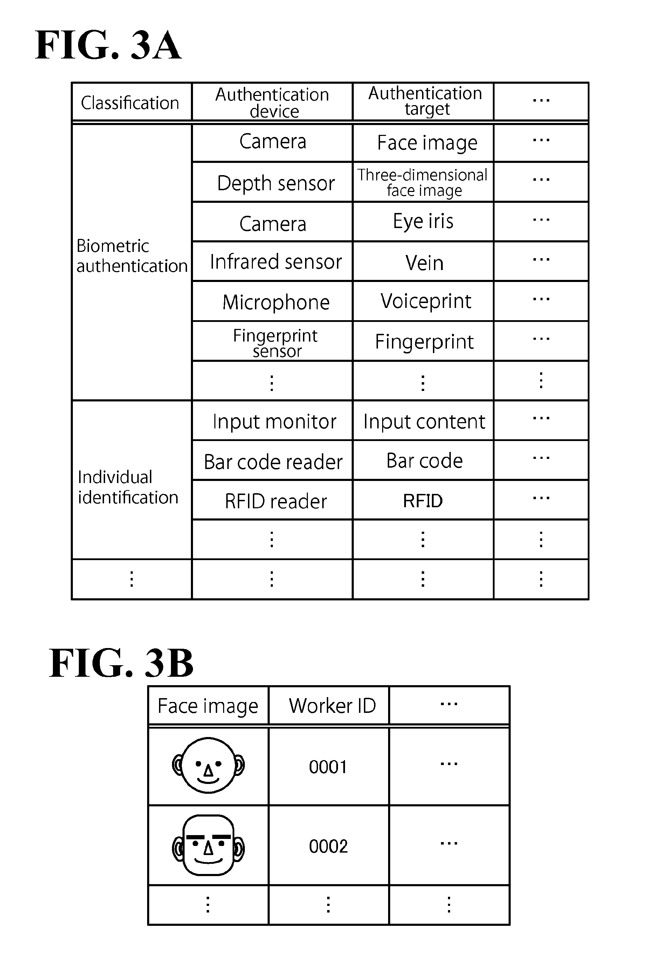

It is noted that the information used in the authentication of the worker M will not be limited to biological information such as a face image. For example, it is possible to configure the authentication device 30 as an input monitor, have the worker M input information through the input monitor, and use the input for the authentication of the worker M. This will be described in detail later by referring to FIG. 3A. In this embodiment, the authentication device 30 will be assumed as a camera.

The work stand 40 is a workspace used for a predetermined kind of work by the robot 10. The alarm device 50 is a unit that performs an alert operation under the operation control of the control apparatus 20. There is no limitation to the kind of the alert operation. Examples include alert by warning sound or by lighting a repeater indicator. The alert may also be through a network coupled to an upper apparatus such as a host computer.

The arrangement layout of the various devices of the robot system 1 will not be limited to the example shown in FIGs. 1A and 1B.

Next, a block configuration of the robot system 1 according to the embodiment will be described by referring to FIG. 2. FIG. 2 is a block diagram of the robot system 1 according to the embodiment. It is noted that FIG. 2 only shows those components necessary for description of the robot system 1, omitting those components of general nature.

It is also noted that the description with reference to FIG. 2 is mainly regarding the internal configuration of the control apparatus 20, with simplified description of some of the various devices already described by referring to FIGs. 1A and 1B.

As shown in FIG. 2, the control apparatus 20 includes a controller 21 and a storage 22. The controller 21 includes an authenticator 21a, a work identifier 21b, an operation instruction determinator 21c, an instructor 21d, and an alarm 21e. The storage 22 stores authentication information 22a, worker information 22b, and operation regulation information 22c.

The controller 21 controls the control apparatus 20 as a whole. The authenticator 21a receives from the authentication device 30 (which is a camera in this embodiment) a face image of the worker M approaching the workspace, and checks the received face image against the authentication information 22a stored in the storage 22. In this manner, the authenticator 21a determines whether the worker M is a registered worker.

It is noted that depending on the configuration of the authentication device 30, there is no limitation to the kind of the authentication target of the authenticator 21a. This will be described by referring to FIG. 3A. FIG. 3A illustrates exemplary authentication targets of the authenticator 21a.

As shown in FIG. 3A, the authenticator 21a is capable of first performing various kinds of authentication processing as biometric authentication. For example, when the authentication device 30 is a depth sensor, the authenticator 21a is capable of performing authentication processing in which the authentication target is a three-dimensional face image.

Another possible method of authentication using a camera as the authentication device 30 is authentication processing in which the authentication target is an eye iris.

When the authentication device 30 is an infrared sensor, the authenticator 21a may perform authentication processing in which the authentication target is a vein pattern. The vein pattern may be acquired by transmitting near-infrared light through the palm or back of the hand or a finger of the worker M.

When the authentication device 30 is a microphone, it is possible to use the microphone for the worker M to utter a sound, acquire a voiceprint of the worker M, and use the voiceprint for the authentication processing. The authentication device 30 may also be a fingerprint sensor, in which case the authentication is fingerprint authentication.

Also FIG. 3A shows that the authentication is not limited to biometric authentication, and that the authentication device 30 may simply be a unit for individual identification, examples including, but not limited to, an input monitor, a bar code reader, and an RFID (Radio Frequency IDentification) reader.

In these cases, the respective authentication targets of the authenticator 21a's authentication processing are an input content, a bar code, and an RFID. Some of the various authentication targets shown in FIG. 3A may be combined together in the authentication processing.

For example, the authentication device 30 may include at least two of the above-described camera, depth sensor, infrared sensor, microphone, fingerprint sensor, input monitor, bar code reader, and RFID reader. This enhances the accuracy of the authentication processing. In this embodiment, however, the authentication device 30 remains a camera and the authenticator 21a performs authentication processing using a face image.

Next, an example of the authentication information 22a will be described. FIG. 3B illustrates examples of the authentication information 22a. As shown in FIG. 3B, the authentication information 22a is information that includes a face image as the authentication target and a worker ID as identification data to identify the worker M.

As examples of the authentication information 22a, FIG. 3B shows a face image of a worker M with the worker ID "0001", and a face image of a worker M with the worker ID "0002".

The authenticator 21a checks the face image of the worker M acquired from the authentication device 30 against the face images registered in advance in the authentication information 22a. When the face image of the worker M acquired from the authentication device 30 shares a feature with any of the face images registered in advance in the authentication information 22a, the authenticator 21a determines that the worker M is a registered worker. Then, the authenticator 21a extracts the worker ID of the worker M.

When the face image of the worker M acquired from the authentication device 30 does not share any feature with any of the face images registered in advance in the authentication information 22a, the authenticator 21a determines that the worker M approaching the workspace is not a registered worker.

Referring back to FIG. 2, the control apparatus 20 will be further described. When the authenticator 21a has determined that the worker M is a registered worker, the authenticator 21a notifies the extracted worker ID to the work identifier 21b. When the authenticator 21a has determined that the worker M is not a registered worker, the authenticator 21a notifies this determination result to the alarm 21e so that the alarm 21e has the alarm device 50 perform its alert operation.

Based on the worker ID received from the authenticator 21a, the work identifier 21b identifies the type of work that the worker M is to perform. Specifically, the work identifier 21b identifies the type of work by acquiring from the worker information 22b stored in the storage 22 a type of work that is correlated in advance to the received worker ID.

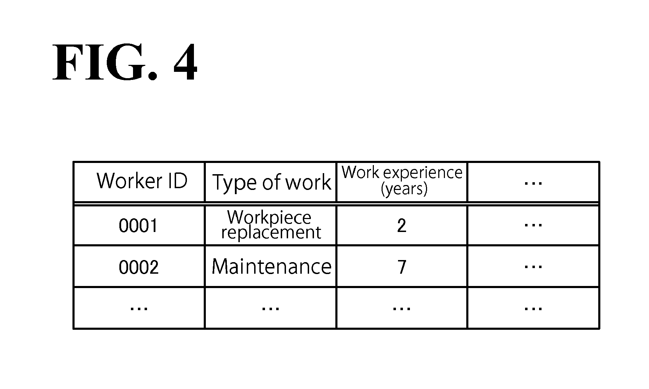

Here, FIG. 4 illustrates an example of the worker information 22b. As shown in FIG. 4, the worker information 22b is information that includes worker IDs, and types of work and work experiences that correspond to the respective worker IDs.

FIG. 4 shows that the worker information 22b includes exemplary two records. Specifically, the worker M with the worker ID "0001" is in charge of "workpiece replacement" work and has "2" years of experience in the work, while the worker M with the worker ID "0002" is in charge of "maintenance" work and has "7" years of experience in the work.

The work identifier 21b uses the worker ID received from the authenticator 21a as a key to extracting the corresponding record from the worker information 22b, thus acquiring the type of work of the worker M. At the same time, the work identifier 21b acquires the work experience of the worker M in this type of work.

While FIG. 4 shows the exemplary work experience in terms of years of experience, any other value indicating work experience is possible. Examples include, but not limited to, a skill-based value allocated to each worker M in accordance with the worker M's skillfulness at particular work.

Also while FIG. 4 shows the types of work in text form in order to facilitate description, this should not be construed as limiting the actual form in which the data is stored.

Referring back to FIG. 2, the control apparatus 20 will be further described. The work identifier 21b notifies to the operation instruction determinator 21c the type of work and the work experience of the worker M acquired from the worker information 22b. The operation instruction determinator 21c determines an operation instruction to the robot 10 based on the type of work and the work experience of the worker M received from the work identifier 21b and based on the operation regulation information 22c stored in the storage 22.

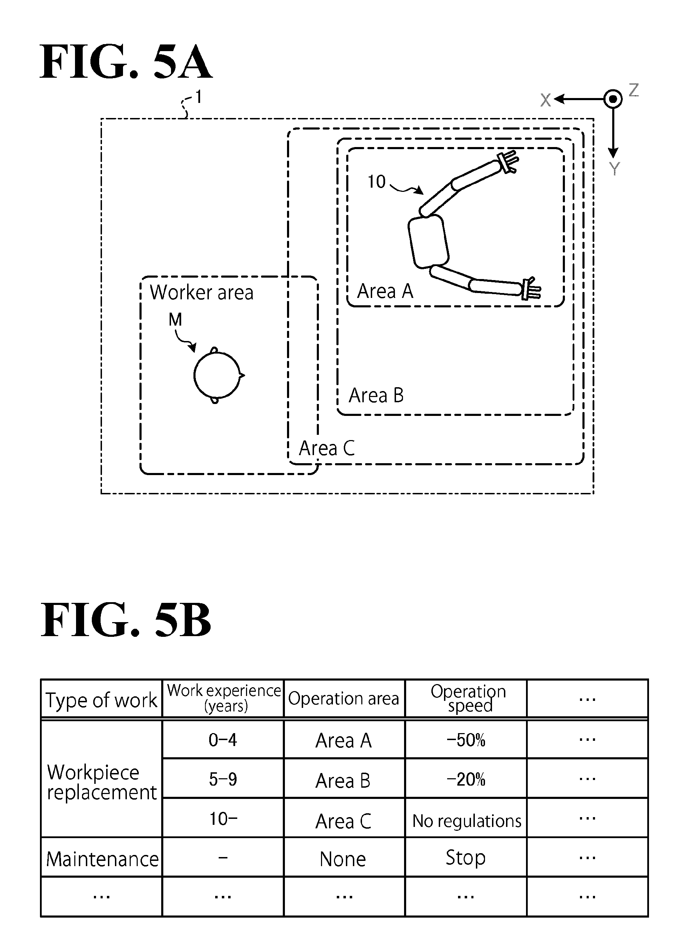

Here, the operation instruction determination processing of the operation instruction determinator 21c will be described in detail by referring to FIGs. 5A and 5B. FIG. 5A schematically illustrates the operation instruction determination processing, and FIG. 5B illustrates an example of the operation regulation information 22c.

It is noted that FIG. 5A is a schematic representation of the robot system 1, with only the worker M and the robot 10 shown.

First, it will be assumed that the robot 10 has predetermined operation areas, namely, an area A, an area B, and an area C, as shown in FIG. 5A. Also it will be assumed that the worker M performs "workpiece replacement" work in a predetermined worker area, as shown in FIG. 5A.

It is noted that as shown in FIG. 5A, the sizes of the area A, the area B, and the area C are in the relationship: the area A < the area B < the area C, and that the area C and the worker area partially overlap.

The areas A to C are registered in advance in the operation regulation information 22c so as to be switchable by the operation instruction determinator 21c in accordance with the type of work and the work experience of the worker M. An example is shown in FIG. 5B.

As shown in FIG. 5B, the operation regulation information 22c is concerning regulations on the robot 10's operation that correspond to the respective types of work and work experiences of the workers M. Exemplary items include the operation area item and the operation speed item correlated to each type of work and work experience.

For example, in FIG. 5B, for "workpiece replacement" as the type of work, the work experience is roughly divided into three, each having its own defined operation area and operation speed.

In this example, for the worker M with "0" to "4" years of work experience, the operation instruction determinator 21c selects the "area A", which is farthest away from the worker area and is the smallest operation area. This area is determined as the new operation area of the robot 10. For the operation speed, the newly determined operation speed of the robot 10 is an operation speed that is "-50%" relative to the prescribed speed of the robot 10.

Similarly, for the worker M with "5" to "9" years of work experience, the operation instruction determinator 21c selects the "area B", which is larger than the "area A" and smaller than the "area C". This area is determined as the new operation area of the robot 10. For the operation speed, the newly determined operation speed of the robot 10 is an operation speed that is "-20%" relative to the prescribed speed of the robot 10.

For the worker M with equal to or more than "10" years of work experience, considering that this worker M is highly skillful at the work, the operation instruction determinator 21c selects the "area C", which is the largest and partially overlaps with the worker area. This area is determined as the new operation area of the robot 10. For the operation speed, the operation speed of the robot 10 is determined with "no regulations", that is, the prescribed speed of the robot 10 remains unchanged.

That is, the operation area and the operation speed of the robot to be determined increase as the worker M is more skillful at the work. In more specific terms, when the value indicating the degree of the work experience of the worker M is in excess of a predetermined threshold, the operation instruction determinator 21c determines the operation area and the operation speed of the robot such that the operation area and the operation speed of the robot 10 are greater than when the degree of the work experience of the worker M is below the threshold.

It is noted that the operation speed is changed through the instructor 21d, described later (see FIG. 2), by changing the inertia ratio of a motor 10a (see FIG. 2), which is a driving source disposed in the robot 10. Thus, while in FIG. 5B the operation speed is defined as a ratio relative to the prescribed speed, this should not be construed in a limiting sense. For example, it is also possible to use the inertia ratio itself to define the operation speed.

Additionally, when it is necessary to stop the robot 10 such as in the "maintenance" work shown in FIG. 5B, the operation regulation information 22c may define the operation area as "none" irrespective of the work experience and define the operation speed as "stop".

Thus, the robot system 1 is capable of switching the operation area and the operation speed of the robot 10 in accordance with the type of work and the work experience of the worker M. This eliminates or minimizes occurrences caused by treating the workers M impartially.

For example, it is not necessary to take such a measure as to uniformly decrease the operation speed to a level for a least skilled worker M in an attempt to ensure safety. This contributes to enhancement of work efficiency.

For an unregistered worker M, the alarm device 50 performs an alert operation, as described above, instead of performing the above-described switching of the operation area and the operation speed in accordance with the type of work and the work experience. This contributes to safety and prevention of theft of workpieces or other objects.

That is, the robot system 1 ensures enhanced work efficiency and safety at the same time.

In FIG. 5B, the operation area and the operation speed of the robot 10 are determined in accordance with the type of work and the work experience of the worker M. It is also possible, for example, to further segment the "workpiece replacement" work in combination with workpiece kind.

Specifically, when a workpiece to be subjected to "workpiece replacement" is a biological sample containing an infectious substance harmful to human body upon contact, it is possible to set the operation area at the "area A" and set the operation speed at "-50%" uniformly, that is, irrespective of the work experience, in an attempt to minimize accidental contact to human body.

The workpiece kind is not intended in a limiting sense; it is also possible to use the kind of operation of the robot 10 for combination with the type of work. For example, in the "workpiece replacement" again, when the robot 10 involves no rotation axis operation about the rotation axis S or no travel shaft operation along the travel shafts SL, it is possible to set the operation area at the "area C" and set the operation speed at "no regulations" even if the worker M has insufficient work experience.

Referring back to FIG. 2, the control apparatus 20 will be further described. The operation instruction determinator 21c notifies to the instructor 21d the determined operation instruction to the robot 10. The instructor 21d instructs the robot 10 to operate based on the operation instruction determined by the operation instruction determinator 21c, that is, based on the operation area and the operation speed.

When the authenticator 21a determines that the worker M is not a registered worker, the alarm 21e has the alarm device 50 perform an alert operation. This may also be notified to an upper apparatus (not shown) at the same time.

The storage 22 is a storage device such as a hard disc drive and a nonvolatile memory, and stores the authentication information 22a, the worker information 22b, and the operation regulation information 22c. The authentication information 22a, the worker information 22b, and the operation regulation information 22c have been already described, and therefore will not be elaborated here.

While in FIG. 2 the control apparatus 20 is described as a single apparatus, the control apparatus 20 may include a plurality of independent apparatuses.

Examples include: an authentication control apparatus to control the authenticator 21a and the authentication device 30; a robot control apparatus to control the robot 10; an alarm control apparatus to control the alarm 21e and the alarm device 50; and an integrated control apparatus to integrate together these authentication control apparatus, robot control apparatus, and alarm control apparatus. These apparatuses are communicative with each other.

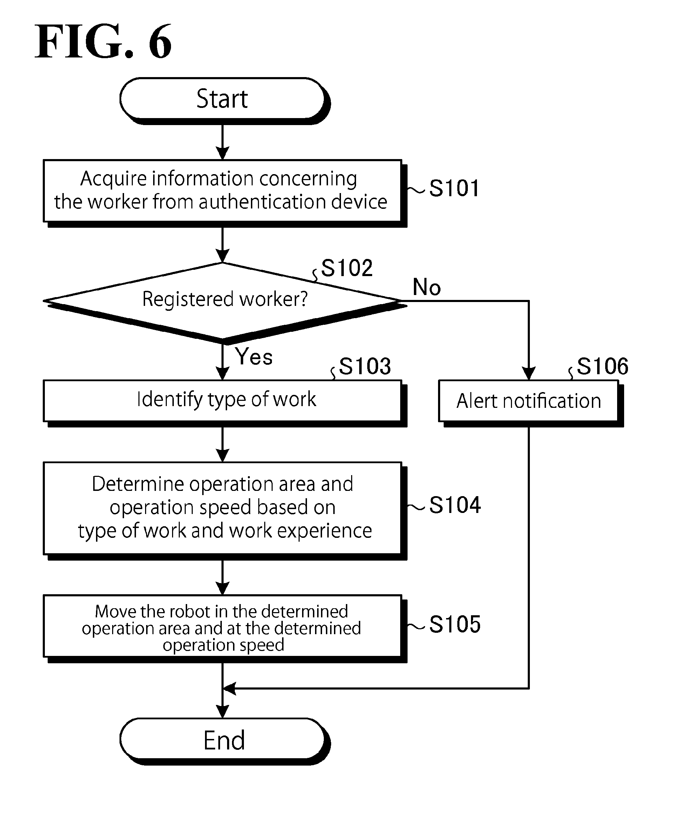

Next, a procedure of processing executed by the robot system 1 according to the embodiment will be described by referring to FIG. 6. FIG. 6 is a flowchart of a procedure of processing executed by the robot system 1 according to the embodiment.

As shown in FIG. 6, the authenticator 21a acquires information concerning the worker M from the authentication device 30 (step S101). Then, the authenticator 21a determines whether the worker M is a registered worker (step S102).

Here, when the worker M is determined as a registered worker (step S102, Yes), the work identifier 21b identifies the type of work of this worker M (step S103).

Then, the operation instruction determinator 21c determines the operation area and the operation speed of the robot 10 based on the identified type of work and the work experience of the worker M (step S104).

Then, the instructor 21d instructs the robot 10 to operate based on the operation area and the operation speed determined by the operation instruction determinator 21c, turning the robot 10 into movement (step S105).

When at step S102 the worker M is not determined as a registered worker (step S102, No), the alarm 21e controls the alarm device 50 to make an alert notification (step S106).

As has been described hereinbefore, the robot system according to the embodiment includes a robot, a storage, an authenticator, an operation instruction determinator (determinator), and an instructor. The robot shares a workspace with a worker. The storage stores authentication information concerning the worker. While the worker is approaching the workspace, the authenticator determines whether the worker is a registered worker based on the authentication information. When the worker is authenticated as a registered worker by the authenticator, the operation instruction determinator determines a new operation area and a new operation speed of the robot in accordance with a type of work and a work experience of the worker. The type of work and the work experience are identified when the worker is authenticated as a registered worker by the authenticator. The instructor instructs the robot to operate based on the new operation area and the new operation speed of the robot determined by the determinator.

Thus, the robot system according to the embodiment ensures enhanced work efficiency and safety at the same time.

In the above-described embodiment, for exemplary purposes, the operation area of the robot relative to the worker area of the worker has been described mainly in terms of horizontal directions with the robot system shown in plan view. It is also possible, however, to take into consideration the vertical direction, that is, in the height direction in regulating the operation of the robot.

For example, when the arms and hands of the robot are clearly positioned above the worker, leaving little risk of contact with the worker or of dropping objects, then it is possible to alleviate the operation regulation of the robot irrespective of the work experience of the worker.

When the workpiece treated by the robot is a heavy object, even though the above-described risk of contact is low, it is possible to establish a strict operation regulation, such as diminishing the operation area of the robot and decreasing the operation speed of the robot, even for a worker who is abundant in the work experience.

In the above-described embodiment, the authentication device has been described as acquiring information mainly when the worker approaching the workspace starts an authentication action at the will of the worker. This, however, should not be construed in a limiting sense.

For example, it is possible to use a camera as the authentication device and use an additional area sensor in the robot system so that when the area sensor detects the worker approaching the workspace, the camera at this timing automatically picks up an image of the worker.

In this case, biological information unique to the worker, such as a face image and fingerprints, may be difficult to acquire. In view of this, the authentication processing may be based on, for example, a piece of clothing worn by the worker or an action pattern of the worker. Employing such a configuration for the robot system provides superior advantageous effects in terms of crime prevention.

In the above-described embodiment, for exemplary purposes, the type of work of the worker is identified based on worker information that correlates in advance the workers with their types of work. This, however, should not be construed in a limiting sense. It is also possible, for example, to dynamically identify the type of work of the worker by an object carried by the worker, such as a workpiece and a tool.

This example can be implemented such that at the time of the authentication, the camera as an exemplary authentication device extensively picks up an image of the workpiece, the tool, or other object, followed by identifying the type of work based on the picked-up image data. Another example of identifying the type of work is by attaching in advance a seal of bar code information to the workpiece, the tool, or other object, and having a bar code reader read the bar code information.

While in the above-described embodiment a two-arm robot has been described for exemplary purposes, this should not be construed as limiting the number of the arms. It is also possible to use a single-arm robot or a multi-arm robot with equal to or more than three arms.

While in the above-described embodiment the robot has been described as what is called a humanoid robot with arms for exemplary purposes, the robot may not necessarily be a humanoid robot.

While in the above-described embodiment the type of work of the worker has been described as mainly including workpiece replacement work and maintenance for exemplary purposes, there is no limitation to the kind of work.

The above-described control apparatus may be a computer, for example. In this case, the controller is a CPU (Central Processing Unit) and the storage is a memory. The functions of the controller can be implemented by loading a program prepared in advance into the controller, which in turn executes the program.

Obviously, numerous modifications and variations of the present invention are possible in light of the above teachings. It is therefore to be understood that within the scope of the appended claims, the invention may be practiced otherwise than as specifically described herein.
- 1: Robot system
- 10: Robot
- 10a: Motor
- 11: Body
- 12: Arm
- 13: Base
- 20: Control apparatus
- 21: Controller
- 21a: Authenticator
- 21b: Work identifier
- 21c: Operation instruction determinator
- 21d: Instructor
- 21e: Alarm
- 22: Storage
- 22a: Authentication information
- 22b: Worker information
- 22c: Operation regulation information
- 30: Authentication device
- 40: Work stand
- 50: Alarm device
- M: Worker
- S: Rotation axis
- SL: Travel shaft

## Claims

1. A robot system (1), **characterized by**:
a robot (10) configured to share a workspace with a worker (M);
a storage (22) configured to store authentication information (22a) of the worker (M);
an authenticator (21a) configured to, while the worker (M) is approaching the workspace, determine whether the worker (M) is a registered worker based on the authentication information (22a);
a determinator (21c) configured to, when the worker (M) is authenticated as a registered worker by the authenticator (21a), determine a new operation area and a new operation speed of the robot (10) in accordance with a type of work and a work experience of the worker (M), the type of work and the work experience being identified when the worker (M) is authenticated as a registered worker by the authenticator (21a); and
an instructor (21d) configured to instruct the robot (10) to operate based on the new operation area and the new operation speed of the robot (10) determined by the determinator (21c).

2. The robot system (1) according to claim 1, further comprising:
an alarm device (50); and
an alarm (21e) configured to make the alarm device (50) perform an alert operation when the worker (M) is not authenticated as a registered worker by the authenticator (21a).

3. The robot system (1) according to claim 1 or 2, further comprising an identifier (21b) configured to, when the worker (M) is authenticated as a registered worker by the authenticator (21a), identify the type of work and the work experience of the worker (M);
wherein the storage (22) is configured to store worker information (22b) indicating types of work and work experiences corresponding to respective registered workers, and
wherein the identifier (21b) is configured to acquire from the worker information (22b) the type of work and the work experience of the worker (M) who has been authenticated as a registered worker by the authenticator 21a, so as to identify the type of work and the work experience of the worker M.

4. The robot system (1) according to claim 3, wherein the identifier (21b) is configured to identify the type of work of the worker (M) based on an object carried by the worker (M).

5. The robot system (1) according to any one of claims 1 to 4, wherein when a value indicating a degree of the work experience of the worker (M) is in excess of a predetermined threshold, the determinator (21c) is configured to determine the new operation area and the new operation speed of the robot (10) such that the new operation area and the new operation speed of the robot (10) are greater than when the degree of the work experience of the worker (M) is below the threshold.

6. The robot system (1) according to any one of claims 1 to 5, further comprising an authentication device (30) configured to acquire information concerning the worker (M) approaching the workspace,
wherein the authenticator (21a) is configured to check the information acquired by the authentication device (30) against the authentication information (22a) stored in the storage (22) so as to determine whether the worker (M) is a registered worker.

7. The robot system (1) according to claim 6, wherein the authentication device (30) comprises at least two authentication devices (30) among a camera, a depth sensor, an infrared sensor, a microphone, a fingerprint sensor, an input monitor, a bar code reader, and an RFID reader.
